# EUROPEAN PATENT APPLICATION

(11) **EP 3 895 839 A1**
(43) Date of publication of application: **20.10.2021**
(21) Application number: 20169997.2
(22) Date of filing: 17.04.2020
(51) Int. Cl.: B23P 15/14, B23F 23/12, B23Q 3/06, B23Q 7/04, F01D 5/06, B23F 23/06

(54) **METHOD AND MOBILE WORKPIECE FIXTURE FOR PRODUCING A CURVIC COUPLING**

(71) Applicant: Siemens Aktiengesellschaft, 80333 München (DE)
(72) Inventor: Fogelin, Rickard, 612 44 Finspång (SE); Helgesson, Tom, 590 34 Tjällmo (SE); Hjulberg, Frank, 617 90 Skärblacka (SE); Sjöqvist, Viktor, 612 42 Finspang (SE)

(57) **Abstract**

The invention relates to a method for processing a hollow-cylindrical workpiece (1) to manufacture coupling teeth (2) on both end faces (13, 15) of the workpiece (1). Moreover, the invention relates to a mobile workpiece fixture (10) for performing such a method.

## Description

The invention relates to a method for processing a hollow-cylindrical workpiece to manufacture coupling teeth on both end faces of the workpiece.

Furthermore, the invention relates to a mobile workpiece fixture for processing a hollow-cylindrical workpiece to manufacture coupling teeth on both end faces of the workpiece.

The present invention addresses the manufacture of in particular curvic couplings. Such a curvic coupling may for example be used to couple two rotating shafts of a turbo engine, such as a gas turbine, a compressor or the like.

A curvic coupling may for example be manufactured by casting a hollow-cylindrical workpiece and subsequently machining the casted workpiece on both end faces with a grinding tool in order to craft the coupling teeth.

There is an ongoing need to reduce the manufacturing tolerances of curvic couplings. Thus, it is an object of the present invention to provide a method for processing a hollow-cylindrical workpiece to manufacture coupling teeth on both end faces of the workpiece, with which the manufacturing tolerances of the coupling teeth can be reduced. Another object of the invention is to provide a mobile workpiece fixture that can be used during such processing.

The above-mentioned objective is achieved by providing a method for processing a hollow-cylindrical workpiece to manufacture coupling teeth on both end faces of the workpiece, comprising the following steps: a) providing a processing machine comprising a workpiece holder and a milling or grinding tool, the workpiece holder comprising a mounting surface that extends along a plane spanned by two machine axes of the processing machine, b) adjusting and mounting a mobile workpiece fixture to the mounting surface of the workpiece holder of the processing machine, wherein the mobile workpiece fixture has at least one projection extending in a direction transverse to and away from the mounting surface, c) machining the at least one projection of the mobile workpiece fixture using the milling or grinding tool in a plane parallel to the mounting surface, to create a contact surface for the workpiece across the free end of the at least one projection, d) adjusting the hollow-cylindrical workpiece such that a first end face of the hollow-cylindrical workpiece abuts the contact surface of the mobile workpiece fixture and fixing the hollow-cylindrical workpiece to the mobile workpiece fixture, e) machining the second end face of the hollow-cylindrical workpiece in planes parallel to the mounting surface to produce coupling teeth, f) dismounting and turning the hollow-cylindrical workpiece, adjusting the hollow-cylindrical workpiece such that its machined second end face abuts the contact surface of the mobile workpiece fixture and fixing the hollow-cylindrical workpiece to the mobile workpiece fixture, and g) machining the first end face of the hollow-cylindrical workpiece in planes parallel to the mounting surface to produce coupling teeth.

The idea underlying the invention is to mount a mobile workpiece fixture comprising at least one projection to the workpiece holder of the processing machine and to subsequently machine the at least one projection to produce a contact surface for the workpiece in such a manner, that the contact surface is parallel to a reference plane spanned by two machine axes of the processing machine or rather parallel to a machining plane of the milling or grinding tool. Accordingly, in step g) the first end face of the workpiece is machined in parallel to the second end face of the workpiece already machined in step e). Thus, the workpiece can be produced with high precision meeting tight tolerances.

According to a preferred embodiment of the invention, the mobile workpiece fixture mounted to the workpiece holder in step b) has a plurality of projections extending in a direction transverse to the mounting surface and in step c) the projections are machined such that the contact surface for the workpiece is created across the free ends of said projections. Thus, the precision of positioning of the workpiece on the contact surface can be improved. Preferably, the projections are evenly distributed on a circular line.

According to a further embodiment of the invention the adjusting in step d) and/or step f) further comprises aligning the center line of the workpiece with a turning axis of the workpiece holder of the processing machine.

Preferably, the mobile workpiece fixture mounted to the workpiece holder in step b) comprises at least three alignment jaws, which are distributed on a circular line, and which can be moved back and forth in a radial direction to align the center line of the workpiece with a turning axis of the workpiece holder of the processing machine in step d) and/or in step f). The movement of the alignment claws can be realized by screws moving just a few micrometers per revolution. By using at least three alignment jaws, the workpiece can be aligned to the turning axis of the workpiece holder in a very precise manner. Accordingly, the radial alignment of the workpiece can be carried out to a high degree of accuracy allowing to further decrease machining tolerances in the radial direction of the workpiece. Preferably, the alignment jaws are evenly distributed on the circular line.

Furthermore, step e) and/or step g) may further comprise machining the inner and/or outer circumferential surface of the workpiece.

The above-mentioned object of the invention is further solved by providing a mobile workpiece fixture, in particular for performing a method according to the present invention, comprising: a base fixture designed to be mounted with its lower side to a mounting surface of a processing machine, and a sacrificial fixture ring designed to be mounted with its lower side to the upper side of the base fixture and to receive an annular hollow-cylindrical workpiece on its upper side, wherein the fixture ring comprises at least one upwardly pointing projection.

The mobile workpiece fixture according to the invention can be mounted to a workpiece holder of a processing machine. Subsequently, the at least one projection of the fixture ring can be machined as described above to form a contact surface for the workpiece. The fixture ring can be exchanged after one use or several uses.

In particular, the fixture ring of the mobile workpiece fixture may comprise a plurality of upwardly pointing projections. This provides an improved precision of positioning of the workpiece on the contact surface of the fixture ring. Preferably, the plurality of projections are positioned evenly distributed along a circular line around the center of the fixture ring.

According to a preferred embodiment of the invention, the mobile workpiece fixture comprises at least three alignment jaws that are coupled to the base fixture, are movable back and forth in a radial direction and are preferably distributed on a circular line around the center line of the base fixture, and the alignment jaws are configured to be operated to align the center line of the workpiece with a turning axis of the workpiece holder of the processing machine. In particular, the alignment jaws can be evenly distributed on the circular line around the center of the base fixture. Thus, the alignment jaws can be operated to achieve precise alignment of the workpiece to a turning axis of the workpiece holder of the processing machine.

Each of the alignment jaws may be arranged on a flat, in particular plate-like ring segment, which is mounted to the base fixture and wherein each ring segment is positioned radially external to the fixture ring.

Preferably, the base fixture of the mobile workpiece fixture has tapped holes and the fixture ring includes through-holes that are adapted to the tapped holes in size and/or position, such that the mobile workpiece fixture is configured for a workpiece to be mounted to the fixture ring by means of bolts and/or screws extending through the workpiece and the fixture ring and being screwed into the tapped holes. Accordingly, the mobile workpiece fixture is configured for a workpiece to be releasably mounted to the contact surface of the fixture ring.

Further features and advantages of the present invention will become apparent by the following description of an exemplary embodiment of the present invention with reference to the attached drawing. In the drawing
- Figures 1 to 4: are schematic views showing method steps of a known method for processing a hollow-cylindrical workpiece to manufacture coupling teeth on both end faces of the workpiece,
- Figure 5: is a flow chart showing method steps of a method according to an embodiment of the present invention for processing a hollow-cylindrical workpiece to manufacture coupling teeth on both end faces of the workpiece,
- Figures 6 to 12: are schematic views showing the single method steps a) to g) of the method shown in Figure 5,
- Figure 13: is a perspective top view of a mobile work-piece fixture according to an embodiment of the present invention used for performing a method shown in figure 5 and
- Figure 14: is a perspective cross-sectional side view of the mobile workpiece fixture shown in figure 13 with a workpiece fixed to the mobile work-piece fixture.

In the following same reference numerals denote identical components or components having a similar function.

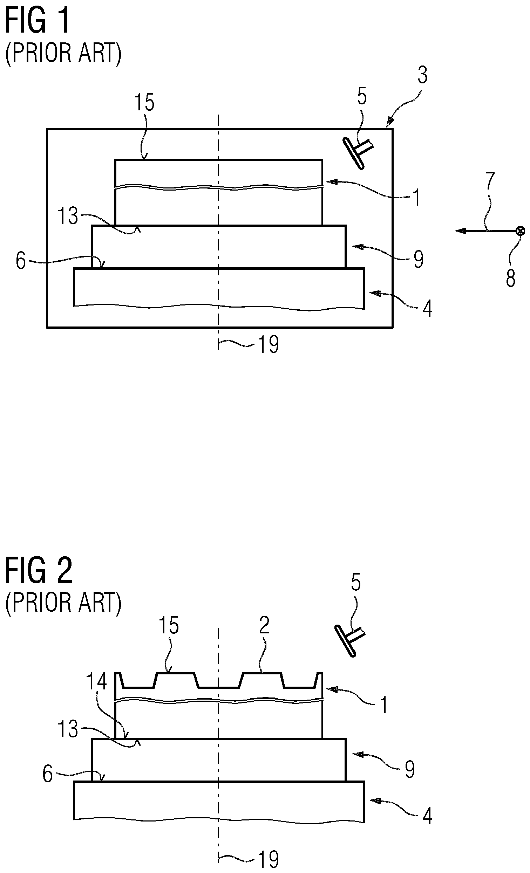

Figures 1 to 4 show a method used so far by the applicant to process a hollow-cylindrical workpiece 1 to manufacture coupling teeth 2 on both end faces of the workpiece 1.

In a first step a processing machine 3 is provided comprising a workpiece holder 4 and a milling or grinding tool 5. The workpiece holder 4 has a mounting surface 6 that extends along a plane spanned by two machine axes 7 and 8 of the processing machine 2.

In a second step a base fixture 9 of a mobile workpiece fixture 10 is arranged on the mounting surface 6 of the workpiece holder 4 of the processing machine 3 and fixed, e.g. by means of several fasting screws 11. The base fixture 9 is designed to receive and fix a hollow-cylindrical workpiece 1 to be machined as well as a fixture ring 12 of the mobile workpiece fixture 10. The term "mobile" means that the workpiece fixture 10 is interchangeable with other mobile workpiece fixtures designed to receive and fix workpiece having other forms and dimensions compared to those of the hollow-cylindrical workpiece 1 to be machined at present.

Next, a workpiece 1 is fixed to the base fixture 9 such that its first end face 13 abuts a contact surface 14 of the base fixture 9. This fixation can be realized for example by means of fasting screws 11 extending through the workpiece 1 and screwed into tapped holes (not shown) of the base fixture 9.

The arrangement received after performing these steps is shown in figure 1.

In a fourth step, the second end face 15 of the hollow-cylindrical workpiece 1 is machined by means of the milling or grinding tool 5 in planes parallel to the mounting surface 6 of the workpiece holder 4 of the processing machine 3 to produce coupling teeth 2, see figure 2, in the present case curvic coupling teeth 2.

After dismounting the workpiece 1 from the base fixture 9 a mobile fixture ring 12 of the mobile workpiece fixture 10, which is provided on one of its end faces with curvic teeth 16 corresponding to the coupling teeth 2 machined in the fourth step, is fixed to the base fixture 9 such that the curvic teeth 16 face outwards.

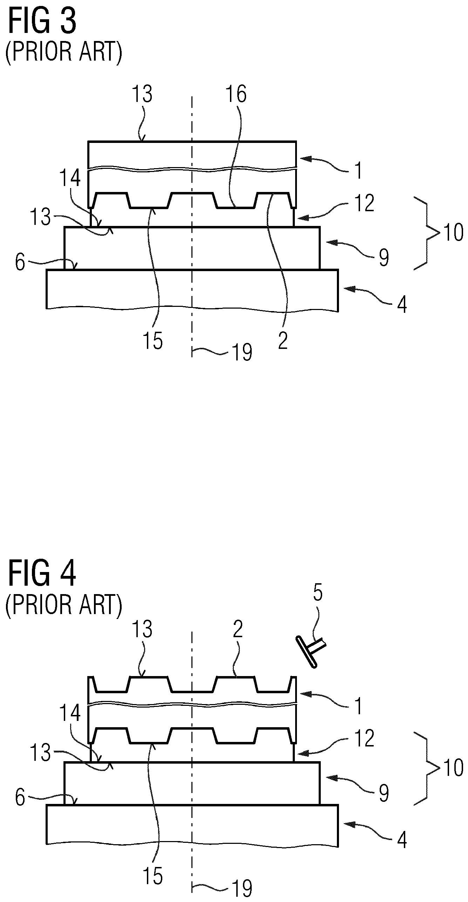

Then, the workpiece 1 is fixed to mobile workpiece fixture 10 such that the curvic coupling teeth 2 of the workpiece 1 engage with the curvic teeth 16 of the fixture ring 12. This arrangement is shown in figure 3.

In a last step the first end face 13 of the hollow-cylindrical workpiece 1 is machined by means of the milling or grinding tool 5 in planes parallel to the mounting surface 6 to produce coupling teeth 2, presently curvic coupling teeth 2, see figure 4.

There is an ongoing need to reduce the manufacturing tolerances of curvic couplings.

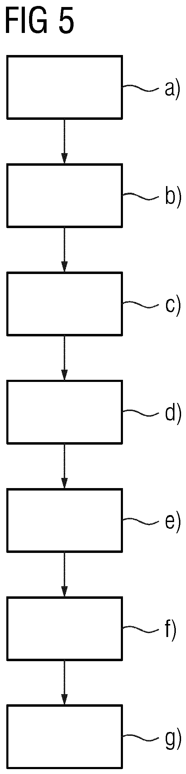

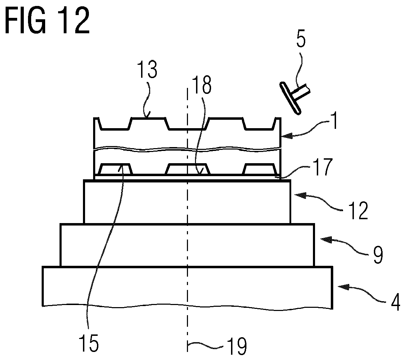

In order to meet this need the present invention provides a method, which is explained hereinafter by way of example referring to figures 5 to 14 showing an embodiment of the present invention.

Figure 5 shows a flow chart of a method according to an embodiment of the present invention for processing a hollow-cylindrical workpiece 1 to manufacture coupling teeth 2 on both end faces 13, 15 of the workpiece 1.

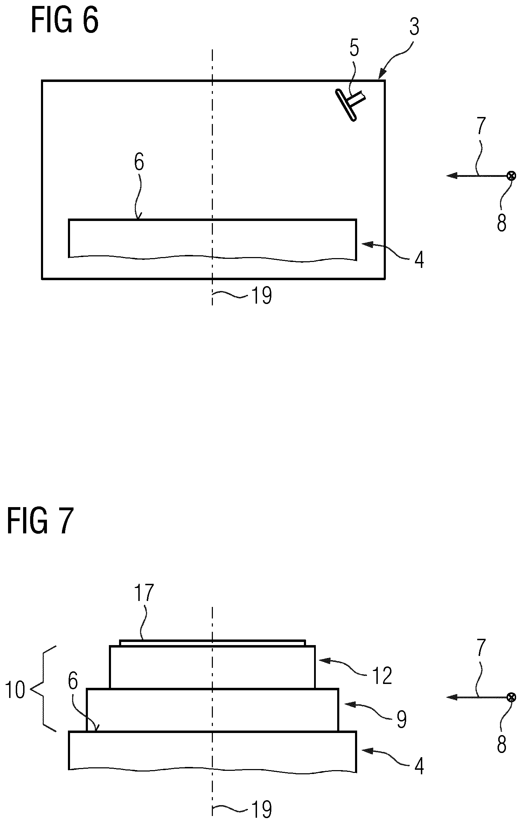

In step a) a processing machine 3 comprising a workpiece holder 4 and a milling or grinding tool 5 is provided. The workpiece holder 4 comprises a mounting surface 6 that extends along a plane spanned by two machine axes 7, 8 of the processing machine 3. This arrangement is schematically shown in figure 6.

Next, in step b) a mobile workpiece fixture 10 is adjusted and fixed to the mounting surface 6 of the workpiece holder 4 of the processing machine 3. In the present case the mobile workpiece fixture 10 comprises a base fixture 9, which is fixed to the mounting surface 6 of the workpiece holder 4, and a sacrificial fixture ring 12, which is fixed to the base fixture 9. The fixture ring 12 has at least one, preferably several projections 17 extending in a direction transverse to and away from the mounting surface 6 of the workpiece holder 4. The arrangement now received is shown in figure 7.

In step c) the at least one projection 17 of the fixture ring 12 is machined using the milling or grinding tool 5 in a plane parallel to the mounting surface 6 of the workpiece holder 4 in order to create a contact surface 18 for the workpiece 1 across the free end of the at least one projection 17, see figure 3C. Accordingly, the free end of the at least one projection 17, i.e. the contact surface 18, is now parallel with respect to the plane spanned by the two machine axes 7, 8 of the processing machine 3, whereby inaccuracies during the assembly of the mobile workpiece fixture 10 are eliminated.

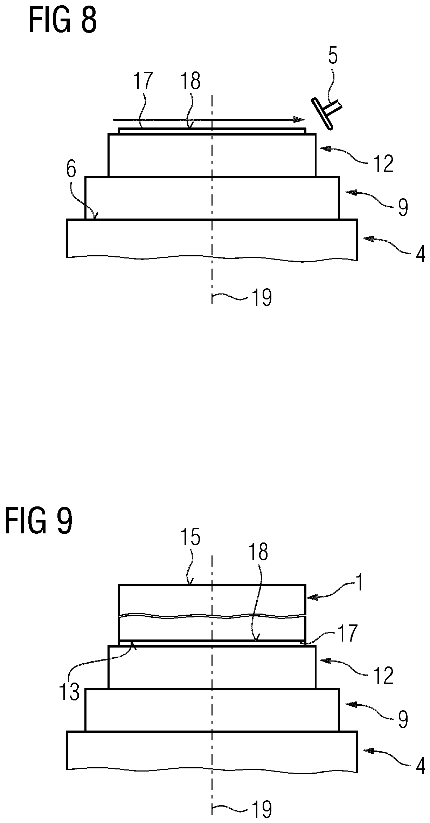

In step d) the hollow-cylindrical workpiece 1 is adjusted such that the first end face 13 of the hollow-cylindrical workpiece 1 abuts the contact surface 18 of the fixture ring 12 and the center line of the workpiece 1 is aligned with a turning axis 19 of the workpiece holder 4 of the processing machine 3. Thereafter, the workpiece 1 is fixed to the fixture ring 12. The arrangement now received is shown in figure 9.

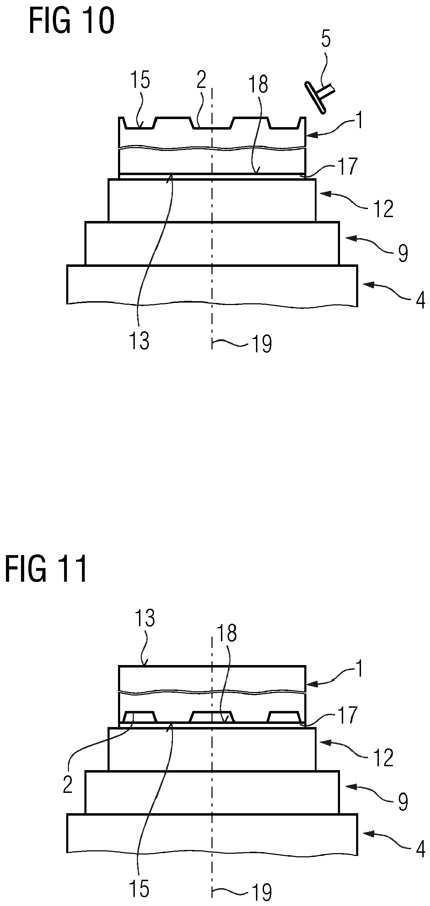

Thereafter, the second end face 15 of the hollow-cylindrical workpiece 1 is machined in planes parallel to the mounting surface 6 of the workpiece holder 4 using the milling or grinding tool 5 to produce coupling teeth 2 in step e), see figure 10, in particular curvic coupling teeth 2. Moreover, the inner and/or outer circumferential surface of the workpiece 1 can be machined in step e), if necessary.

In step f) the hollow-cylindrical workpiece 1 is dismounted and turned. Then, the hollow-cylindrical workpiece 1 is adjusted such that its machined second end face 15 abuts the contact surface 18 of the fixture ring 12 and the center line of the workpiece 1 is aligned with the turning axis 19 of the workpiece holder 4 of the processing machine 3, see figure 11.

Now, in step g) the first end face 13 of the hollow-cylindrical workpiece 1 is machined in planes parallel to the mounting surface 6 using the milling or grinding tool 5 to produce coupling teeth 2 as shown in figure 11, in particular curvic coupling teeth. Moreover, the inner and/or outer circumferential surface of the workpiece 1 can be machined in step g).

Thanks to the machining of the at least one projection 17 of the fixture ring 12 in step c) to create a contact surface 18 for the workpiece 1 across the free end of that least one projection 17, axial and radial run-outs can be minimized leading to a curvic coupling meeting tight tolerance requirements, because it is ensured that the first end face 13 of the workpiece 1 will extend parallel to the second end face 15 after machining.

When machining the next workpiece 1, steps a) to c) do not have to be performed again as long as the fixture ring 12 maintains mounted to the processing machine. However, as soon as the fixture ring 12 is once dismounted steps a) to c) have to be performed again in order to machine a further workpiece 1. Against this background the component defining the at least one projection 17, i.e. the fixture ring 12, is formed as a sacrificial separate component, because it needs to be replaced from time to time.

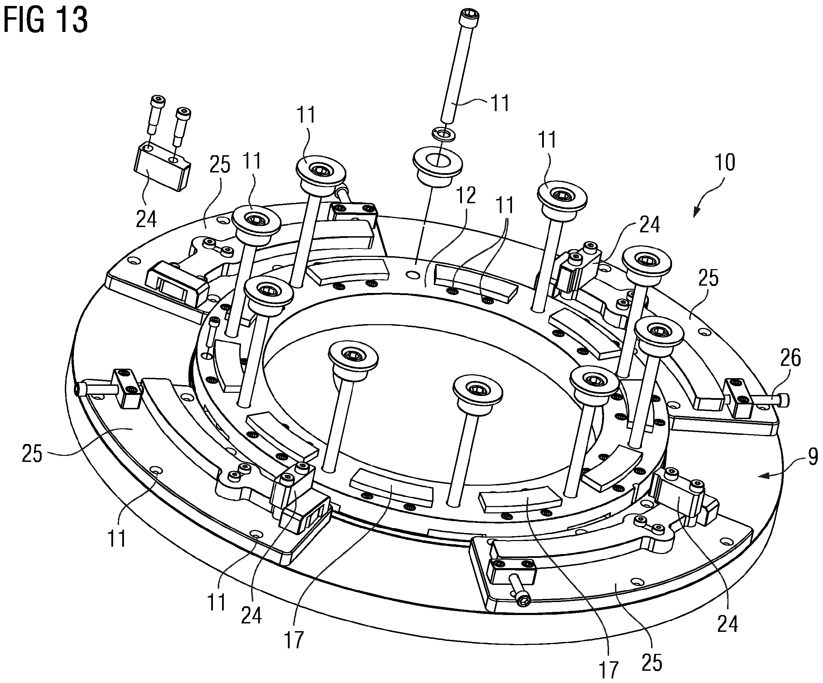

Figure 13 shows an example of a mobile workpiece fixture 10 according to an embodiment of the present invention having a base fixture 9 and a sacrificial fixture ring 12.

The base fixture 9 presently has the form of an annular plate. It is designed to be mounted with its lower side to a mounting surface 6 of a processing machine 3, as schematically shown in figure 3B, e.g. by means of fastening screws 11.

The fixture ring 12 is designed to be mounted with its lower side to the upper side of the base fixture 9 and to receive the hollow-cylindrical workpiece 1 on its upper side. The fixation of the fixture ring 12 at the base fixture 9 is realized by a plurality of circumferentially arranged fastening screws 11 extending through through-holes 22 of the fixture ring 12 and screwed into tapped holes 23 of the base fixture 9. In order to fix the workpiece 1 on the upper side of the fixture ring 12, the fixture ring 12 includes through-holes 22 and the base fixture 9 has tapped holes 23, such that the workpiece 1 can be fixed by means of fastening screws 11 extending through through-holes 22 of the workpiece 1 as well as through the through-holes 22 of the fixture ring 12 and screwed into the tapped holes 23 of the base fixture 9. Moreover, the fixture ring 12 comprises a plurality of upwardly pointing projections 17, which are circumferentially distributed over the upper surface of the fixture ring 12. The free ends of these projections 17 are machined in step c) of the above-described method in order to create the contact surface(s) 18 for the workpiece 1.

In order to align the center line of the workpiece 1 with the turning axis 19 of the workpiece holder 4 of the processing machine 3, the mobile workpiece fixture 10 further comprises several alignment jaws 24 that are coupled to the base fixture 9 and are distributed on a circular line around the center line of the base fixture 9. In the present case four alignment jaws 24 are provided. Each of the alignment jaws 24 is arranged on a flat ring segment 25, which is mounted to the base fixture 9 by means of fastening screws 11, and each ring segment 25 is positioned radially external to the fixture ring 12. The alignment jaws 24 are movable back and forth in a radial direction by adjusting screws 26, which preferably move only few micrometers per revolution. By means of these alignment jaws 24 the radial position of the workpiece 1 can be adjusted as long as the fastening screws 11 holding the workpiece 1 on the fixture ring 12 are not completely tightened.

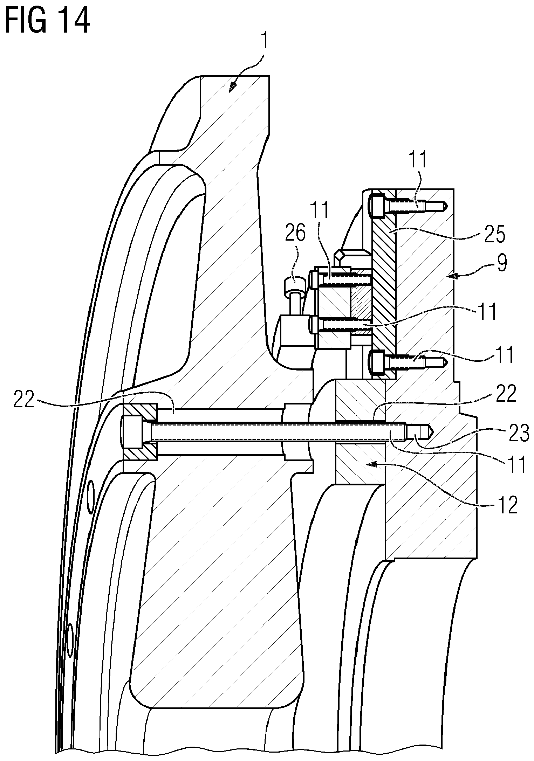

Figure 14 shows the mobile workpiece fixture 10 with an attached workpiece 1.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Method for processing a hollow-cylindrical workpiece (1) to manufacture coupling teeth (2) on both end faces (13, 15) of the workpiece (1), comprising the following steps:
a) providing a processing machine (3) comprising a workpiece holder (4) and a milling or grinding tool (5), the workpiece holder (4) comprising a mounting surface (6) that extends along a plane spanned by two machine axes (7, 8) of the processing machine (3),
b) adjusting and fixing a mobile workpiece fixture (10) to the mounting surface (6) of the workpiece holder (4) of the processing machine (3), wherein the mobile workpiece fixture (10) has at least one projection (17) extending in a direction transverse to and away from the mounting surface (6),
c) machining the at least one projection (17) of the mobile workpiece fixture (10) using the milling or grinding tool (5) in a plane parallel to the mounting surface (6), to create a contact surface (18) for the workpiece (1) across the free end of the at least one projection (17),
d) adjusting the hollow-cylindrical workpiece (1) such that a first end face (13) of the hollow-cylindrical workpiece (1) abuts the contact surface (18) of the mobile workpiece fixture (10) and fixing the hollow-cylindrical workpiece (1) to the mobile workpiece fixture (10),
e) machining the second end face (15) of the hollow-cylindrical workpiece (1) in planes parallel to the mounting surface (6) to produce coupling teeth (2),
f) dismounting and turning the hollow-cylindrical workpiece (1), adjusting the hollow-cylindrical workpiece (1) such that its machined second end face (15) abuts the contact surface (18) of the mobile workpiece fixture (10) and fixing the hollow-cylindrical workpiece (1) to the mobile workpiece fixture (10), and
g) machining the first end face (13) of the hollow-cylindrical workpiece (1) in planes parallel to the mounting surface (6) to produce coupling teeth (2).

2. Method according to claim 1,
wherein the mobile workpiece fixture (10) mounted to the workpiece holder (6) in step b) has a plurality of projections (17) extending in a direction transverse to the mounting surface (6) and wherein in step c) the projections (17) are machined such that the contact surface (18) is created across the free ends of said projections (17),
wherein the projections (17) are preferably evenly distributed on a circular line.

3. Method according to claim 1 or 2,
wherein the adjusting in step d) and/or step f) further comprises aligning the center line of the workpiece (1) with a turning axis (19) of the workpiece holder (4) of the processing machine (3).

4. Method according to claim 3,
wherein the mobile workpiece fixture (10) mounted to the workpiece holder (4) in step b) comprises at least three alignment jaws (24), which are distributed on a circular line, and which can be moved back and forth in a radial direction to align the center line of the workpiece (1) with a turning axis (19) of the workpiece holder (4) of the processing machine (3) in step d) and/or in step f).

5. Method according to one of the foregoing claims wherein step e) and/or step g) further comprises machining the inner and/or outer circumferential surface of the workpiece (1).

6. Mobile workpiece fixture (10),
in particular for performing a method according to claim 1, comprising:
a base fixture (9) designed to be mounted with its lower side to a mounting surface (6) of a processing machine (3), and
a sacrificial fixture ring (12) designed to be mounted with its lower side to the upper side of the base fixture (9) and to receive an annular hollow-cylindrical workpiece (1) on its upper side, wherein the fixture ring (12) comprises at least one upwardly pointing projection(17).

7. Mobile workpiece fixture (10) according to claim 6, wherein the fixture ring (12) comprises a plurality of upwardly pointing projections (17).

8. Mobile workpiece fixture (10) according to claim 6 or 7, wherein the fixture ring (12) is exchangeably mounted to the base fixture (9).

9. Mobile workpiece fixture (10) according to one of claims 6 to 8,
wherein the fixture ring (12) is mounted to the base fixture (9) using a plurality of circumferentially arranged screws (11) .

10. Mobile workpiece fixture (10) according to one of claims 6 to 9,
wherein the mobile workpiece fixture (12) further comprises at least three alignment jaws (24) that are coupled to the base fixture (9) and are preferably distributed on a circular line around the center point of the base fixture (9), and
wherein the alignment jaws (24) are configured to be operated to align the center line of the workpiece (1) with a turning axis (19) of the workpiece holder (4) of the processing machine (3).

11. Mobile workpiece fixture (10) according to claim 10, wherein each of the alignment jaws (24) is arranged on a flat ring segment (25), which is mounted to the base fixture (9) and wherein each ring segment (25) is positioned radially external to the fixture ring (12).

12. Mobile workpiece fixture (10)according to one of claims 6 to 11,
wherein the base fixture (9) has tapped holes (23) and the fixture ring (12) includes through-holes (22) that are adapted to the tapped holes (23) in size and/or position, such that the mobile workpiece fixture (10) is configured for a workpiece (1) to be mounted to the fixture ring (12) by means of bolts and/or screws (11) extending through the workpiece (1) and the fixture ring (12) and being screwed into the tapped holes (23).
